# EUROPEAN PATENT APPLICATION

(11) **EP 4 376 222 A1**
(43) Date of publication of application: **29.05.2024**
(21) Application number: 23210376.2
(22) Date of filing: 16.11.2023
(51) Int. Cl.: H01R 4/2433, H01R 11/09, H02G 15/00, H01R 13/52

(54) **WIRE CONNECTOR AND OPERATION METHOD THEREOF**

(30) Priority: 24.11.2022 IN 202241067581
(71) Applicant: FCI OEN Connectors Limited, 682019 Vyttila Kochi (IN)
(72) Inventor: PAUL, Mithun Hormese, 682025 Palarivattom (IN)
(74) Representative: Mewburn Ellis LLP

(57) **Abstract**

Provided is a wire connector including a first cover (1) and a second cover (2) that exhibit electrically insulating property. In the assembled state, the first cover (1) and the second cover (2) surround an internal space and define a plurality of ports through which the wire is inserted. Further, the wire connector also includes a seal (3) accommodated in the internal space. In the assembled state, the seal (3) closes the gap between the first cover (1) and the second cover (2), and closes all ports whether there are wires passing through the ports or not, thus isolates the internal space from the exterior by the sealing of the seal (3). In this way, in an assembled state of the first cover and the second cover, the wire connector has a good sealing effect. Further provided is an operation method of the wire connector.

## Description

### CROSS-REFERENCE TO RELATED APPLICATIONS

This application claims priority to and the benefit of Indian Patent Application Serial No. 202241067581, filed on November 24, 2022, entitled "WIRE CONNECTOR AND OPERATION METHOD THEREOF." The contents of this application are incorporated herein by reference in their entirety.

### TECHNICAL FIELD

The present disclosure relates to the field of electrical connection of wires, in particular to a wire connector and an operation method thereof, the wire connector may especially be an insulation displacement connector (IDC).

### BACKGROUND

For wire connectors used for electrical connection of wires, insulation displacement connector is typical. For an ordinary insulation displacement connector, a plurality of wires are inserted into the insulation displacement connector through ports of the insulation displacement connector, and then the insulating layers of the plurality of wires are cut open by a cutting contact so that the cutting contact and the cores of the plurality of wires are in electrical connection, thus a plurality of wires can be electrically connected.

The above-mentioned insulation displacement connector has a wide range of applications. For example, it can be used for electrical connection of wires of outdoor lighting fixtures. In this application, for example, the internal space of the wire connector should be isolated from the exterior environment.

### BRIEF SUMMARY

This application is made in view of the above situation. An object of the present disclosure is to provide a wire connector, which can isolate the internal space of the wire connector from the exterior, regardless of the number of inserted wires, thereby having a good sealing effect.

Another object of the present disclosure is to provide an operation method of the wire connector.

Embodiments of this disclosure provide one of the following technical solutions.

The present disclosure provides a wire connector, comprising:
a first cover configured to exhibit insulating property and comprise a first sidewall;
a second cover configured to exhibit insulating property and comprise a second sidewall, wherein in an assembled state in which the second cover is assembled with the first cover, the second cover and the first cover surround an internal space, and the second sidewall and the first sidewall define a plurality of ports, for wires to pass through to enter the internal space; and
a seal configured to exhibit elasticity and be accommodated in the internal space, wherein in the assembled state, the seal closes a gap between the first cover and the second cover and the seal comprises pierceable membranes or thin portions for closing the ports.

In one alternative embodiment, in a state a plurality of wires are inserted into at least a portion of the plurality of ports, the seal closes the ports including ones through which the wires have passed through and one(s) not passed through by the wire(s), so that the internal space is isolated from an exterior by sealing of the seal.

In another one alternative embodiment, the seal comprises a sidewall sealing portion, wherein the first sidewall and the second sidewall define an inner sidewall surface, and the sidewall sealing portion is in sealing contact with at least a part of the inner sidewall surface.

In another one alternative embodiment, the first cover further comprises a first end wall, an outer periphery of the first end wall being connected with the first sidewall,

the second cover further comprises a second end wall, an outer periphery of the second end wall being connected with the second sidewall, and an edge at a first end of the sidewall sealing portion is in sealing contact with the first end wall, and an edge at a second end of the sidewall sealing portion is in sealing contact with the second end wall.

In another one alternative embodiment, the sidewall sealing portion comprises a main body, a first sealing lip and a second sealing lip, wherein the first sealing lip extends from the main body towards the first end wall and is in sealing contact with the first end wall, and the second sealing lip extends from the main body towards the second end wall and is in sealing contact with the second end wall.

In another one alternative embodiment, the first cover further comprises a plurality of first arms protruding away from the internal space from the first sidewall, and the second cover further comprises a plurality of second arms protruding away from the internal space from the second sidewall, wherein the first arms and the second arms are arranged in pairs, and a passage in communication with the corresponding port is defined between the first arm and the corresponding second arm.

In another one alternative embodiment, the passages extend in parallel to each other.

In another one alternative embodiment, the seal further comprises passage sealing portions , each of which is used for sealing the passage around a wire to be inserted into the passage.

In another one alternative embodiment, the seal further comprises passage sealing portions , wherein each of the passage sealing portions extends into the corresponding passage, the passage sealing portion is in shape fit with the passage, and an insertion hole is formed in center of the passage sealing portion, and the pierceable membranes or thin portion is located in the insertion hole, the seal is configured to receive the wire so that the wire is inserted into the internal space by pushing away or piercing the thin portion, and the insertion hole is closed by the thin portion in a state that the wire is not inserted.

In another one alternative embodiment, on an inner peripheral surface of the insertion hole, the passage sealing portion is formed with one or more annular protrusion(s) which is/are used for contacting with the wire inserted into the insertion hole, so that sealing the passage.

In another one alternative embodiment, the passage sealing portions are fixed to the sidewall sealing portion of the seal, and are configured to protrude away from the internal space from an outer peripheral surface of the wall sealing portion.

In another one alternative embodiment, further comprising a first limiting mechanism provided on at least one of the first cover and the second cover, wherein the first limiting mechanism, the first sidewall and the second sidewall define a mounting location of the sidewall sealing portion of the seal in the assembled state.

In another one alternative embodiment, the first limiting mechanism comprises a plurality of first limiting protrusions provided on the first cover and a plurality of second limiting protrusions provided on the second cover, wherein the first limiting protrusions protrude toward the second cover, and the second limiting protrusions protrude toward the first cover.

In another one alternative embodiment, further comprising a second limiting mechanism provided on the first cover, wherein the second limiting mechanism defines channels aligned with the corresponding ports, along which the wires passing through the ports be inserted into the internal space.

In another one alternative embodiment, the second limiting mechanism comprises a plurality of third limiting protrusions provided on the first cover, wherein the third limiting protrusions are arranged in pairs, and the channels are defined between one or more pairs of the third limiting protrusions.

In another one alternative embodiment, for each pair of the third limiting protrusions, from a side close to the corresponding port to a side away from the corresponding port, a distance between inner side surfaces of the two third limiting protrusions that are opposite to each other gradually decreases.

In another one alternative embodiment, in the plurality of third limiting protrusions, contains common third limiting protrusions which define two adjacent channels.

In another one alternative embodiment, at least a part of the third limiting protrusions is used to define a mounting location of the seal.

In another one alternative embodiment, further comprising a cutting contact made of a conductive material, wherein the cutting contact comprises a plate body and a plurality of cutting blades, the plurality of cutting blades standing up from the plate body toward the channels or protruding into the channels, and configured for cutting an insulating layer of a part of the wire extending into the internal space, so that the cutting contact is in electrical connection with a conductive core of the wire.

In another one alternative embodiment, cutting grooves are defined between every two adjacent cutting blades, and the cutting grooves and the corresponding channels are aligned, whereby the insulating layer of a wire located in the cutting groove is positioned to be cut open by the cutting blades on both sides of the cutting groove.

In another one alternative embodiment, one of the plate body or the second cover is provided with a mounting portion, the other one of the plate body or the second cover is provided with a mounting hole, wherein the cutting contact is fixedly mounted on the second cover via fitting of the mounting portion and the mounting hole.

In another one alternative embodiment, one of the plate body or the second cover is provided with a guiding portion, the other one of the plate body or the second cover is provided with a guiding groove, wherein the cutting contact is guided to be mounted on the second cover via alignment and fit of the guiding portion and the guiding groove.

In another one alternative embodiment, further comprising a third limiting mechanism provided on the second cover, wherein the third limiting mechanism defines a mounting location of the cutting contact.

In another one alternative embodiment, the third limiting mechanism comprises a plurality of fourth limiting protrusions provided on the second cover and protruding from the second cover toward the first cover.

In another one alternative embodiment, at least a part of the fourth limiting protrusions are used to define a mounting location of the seal.

In another one alternative embodiment, one of the first sidewall or the second sidewall is formed with one or more orientation groove(s), the other one of the first sidewall or the second sidewall is provided with one or more orientation protrusion(s), wherein the first cover and the second cover are assembled together by orientation of the orientation groove(s) and the orientation protrusion(s).

In another one alternative embodiment, the orientation groove extends linearly in an assembly direction of the first cover and the second cover and is formed on an outer wall surface of the first sidewall, wherein the orientation groove has an opening that opens toward the second sidewall, the orientation protrusion is formed on an inner wall surface of the second sidewall and extends linearly in the assembly direction, and the orientation protrusion is in shape fit with the orientation groove.

In another one alternative embodiment, one of the first sidewall or the second sidewall is formed with a plurality of first snap-fit portions, the other one of the first sidewall or the second sidewall is provided with a plurality of second snap-fit portions, wherein the first snap-fit portions and the second snap-fit portions are configured to fit with each other to maintain the assembled state.

In another one alternative embodiment, the first cover and the second cover are able to be in a pre-assembled state, a distance between a first end wall of the first cover and a second end wall of the second cover in an assembly direction of the first cover and the second cover is larger in the pre-assembled state than in the assembled state.

In another one alternative embodiment, the first snap-fit portions and the second snap-fit portions are configured to align with each other to maintain the pre-assembled state.

In another one alternative embodiment, an outer wall surface of the first sidewall is provided with one or more snap-fit protrusions, and the second sidewall is formed with a plurality of snap-fit holes spaced apart in the assembly direction, and the snap-fit protrusions are fitting with different snap-fit holes to maintain the assembled state or the pre-assembled state.

In another one alternative embodiment, the seal is made of elastic material.

In another one alternative embodiment, the elastic material includes rubber or silicone, or the elastic material is rubber or silicone.

In another one alternative embodiment, the wire connector is an insulation displacement connector.

The present disclosure further provides an operation method of the wire connector, comprising: providing the wire connector in a pre-assembly state; inserting a plurality of wires into the wire connector via a plurality of ports of the wire connector; and assembling the first cover and the second cover so that the wire connector is in an assembled state, whereby a cutting contact of the wire connector cuts open insulating layers of the plurality of wires, and a seal of the wire connector is held by the first cover and the second cover, so that the seal closes a gap between the first cover and the second cover and closes the plurality of ports.

In one alternative embodiment, pierceable membranes or thin portions of the seal are pierced by the insertion of the plurality of wires, so that the wires are inserted via the ports.

The present disclosure further provides a wire connector, comprising: a housing having an internal space and provided with a plurality of ports through which wires can enter the internal space; and a seal configured to exhibit elasticity and be accommodated in the internal space, wherein the seal is configured to isolate the internal space from an exterior by:
closing ports of the plurality of ports through which wires have not passed; and
sealing around wires inserted into ports of the plurality of ports.

In one alternative embodiment, the housing comprises a sidewall, a first end wall and a second end wall, the plurality of ports are formed on the sidewall, the seal includes a sidewall sealing portion that is in shape fit with an entire inner wall surface of the sidewall, the sidewall sealing portion being in contact with the inner wall surface of the sidewall, an outer periphery of the first end wall and an outer periphery of the second end wall are connected by the sidewall, so that the sidewall, the first end wall and the second end wall surround the internal space, and the sidewall sealing portion has an edge at its first end in contact with the first end wall and an edge at its second end in contact with the second end wall.

In another one alternative embodiment, the housing further comprises a plurality of protrusions, wherein the protrusions protrude from the sidewall away from the internal space, and each of the protrusions defines a passage communicating with the corresponding port,

the seal further comprises passage sealing portions fixed to the sidewall sealing portion, wherein the passage sealing portion is in shape fit with the passage and protrudes into the passage, and an insertion hole is formed in center of the passage sealing portion, the seal further comprises a thin portion located in the insertion hole, and the thin portion being used to isolate the insertion hole from the internal space.

In another one alternative embodiment, on an inner peripheral wall of the insertion hole, the passage sealing portion is formed with one or more annular protrusion(s) configured for making sealing contact with a wire inserted into the insertion hole.

In another one alternative embodiment, the seal is made of elastic material.

### BRIEF DESCRIPTION OF DRAWINGS

FIG. 1A is a schematic perspective view illustrating a wire connector according to an example of the present disclosure, wherein the wire connector is in an assembled state.
FIG. 1B is another schematic perspective view illustrating the wire connector in FIG. 1A.
FIG. 1C is a schematic side view illustrating the wire connector in FIG. 1A.
FIG. 1D is a schematic top view illustrating the wire connector in FIG. 1A.
FIG. 2A is a schematic perspective view illustrating the wire connector in FIG. 1A, wherein the wire connector is in a pre-assembled state.
FIG. 2B is another schematic perspective view illustrating the wire connector in FIG. 2A.
FIG. 2C is a schematic side view illustrating the wire connector in FIG. 2A.
FIG. 2D is a schematic top view illustrating the wire connector in FIG. 2A.
FIG. 3A is a schematic perspective view illustrating a first cover of the wire connector in FIG. 1A.
FIG. 3B is another schematic perspective view illustrating the first cover in FIG. 3A.
FIG. 3C is a schematic side view illustrating the first cover in FIG. 3A.
FIG. 3D is a schematic top view illustrating the first cover in FIG. 3A.
FIG. 4A is a schematic perspective view illustrating a second cover of the wire connector in FIG. 1A.
FIG. 4B is another schematic perspective view illustrating the second cover in FIG. 4A.
FIG. 4C is a schematic side view illustrating the second cover in FIG. 4A.
FIG. 4D is a schematic top view illustrating the second cover in FIG. 4A.
FIG. 5A is a schematic perspective view illustrating a seal of the wire connector in FIG. 1A.
FIG. 5B is another schematic perspective view illustrating the seal in FIG. 5A.
FIG. 5C is a schematic side view illustrating the seal in FIG. 5A.
FIG. 5D is a schematic top view illustrating the seal in FIG. 5A.
FIG. 5E is a schematic cross-sectional view illustrating the seal in FIG. 5A, wherein section lines are omitted.
FIG. 6A is a schematic perspective view illustrating a cutting contact of the wire connector in FIG. 1A.
FIG. 6B is another schematic perspective view illustrating the cutting contact in FIG. 6A.
FIG. 6C is a schematic side view illustrating the cutting contact in FIG. 6A.
FIG. 6D is a schematic top view illustrating the cutting contact in FIG. 6A.
FIG. 7A to FIG. 7E are explanatory views for explaining positional relationship and connection relationship between different components of the wire connector in FIG. 1A in an assembled state.

### DETAILED DESCRIPTION

Exemplary examples of the present disclosure are described below with reference to the accompanying drawings. It should be understood that these specific descriptions are only used to teach those skilled in the art how to implement the present disclosure, and are not used to exhaust all possible implementations of the present disclosure, nor to limit the scope of the present disclosure.

In the present disclosure, unless otherwise specified, "length direction", "width direction" and "thickness direction" respectively refer to a length direction, a width direction and a thickness direction of a housing (the assembly of the first cover and the second cover) of the wire connector according to an example of the present disclosure.

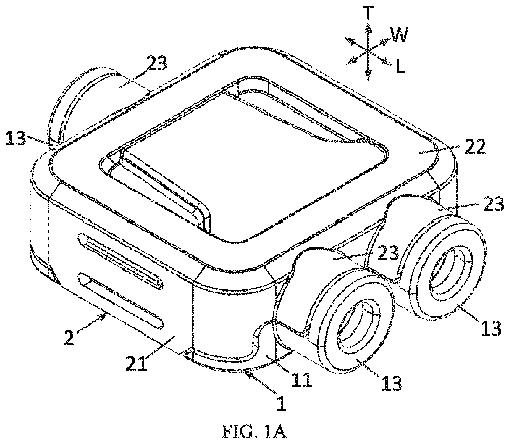

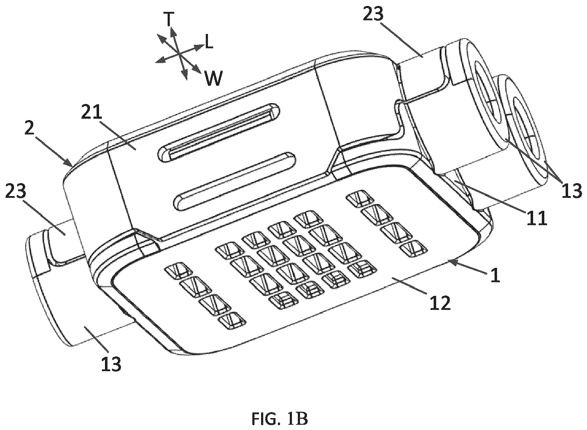

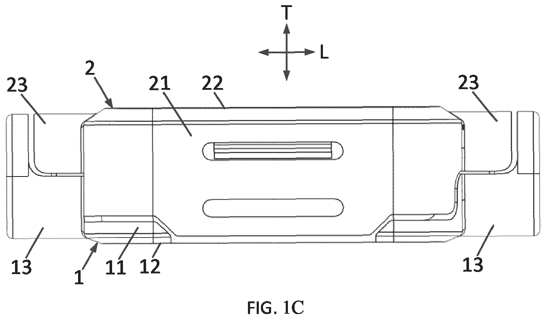

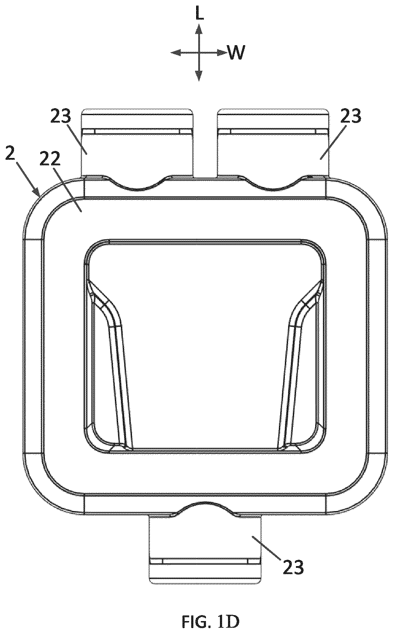

The wire connector according to an example of the present disclosure may be an insulation displacement connector. As shown in FIG. 1A to FIG. 7E, the wire connector according to an example of the present disclosure may comprise a first cover 1, a second cover 2, a seal 3 and a cutting contact 4 to be assembled together. The first cover 1 and the second cover 2 are assembled together to form a housing of the wire connector, and the seal 3 and the cutting contact 4 are accommodated in the internal space of the housing. After a plurality of wires extend into the internal space of the housing through the seal 3, the insulation layer of the wire can be cut out by the cutting contact 4, so that the cutting contact 4 is in electrical connection with the conductive cores of the wires. In this way, the plurality of wires extending into the internal space of the housing can be electrically connected in a simple manner. The usage manner, structure and other features of the wire connector of the present disclosure are not limited thereto.

In this example, the first cover 1 can be used as the base of the housing. The first cover 1 exhibits an electrically insulating property; for example, it can be made of insulating material, such as via injection molding of plastic or nylon. The housing may enclose a conducting terminal for electrically connecting wire ends inserted into the housing. An inlay made of non-insulating material can be further provided in the insulating material, for example.

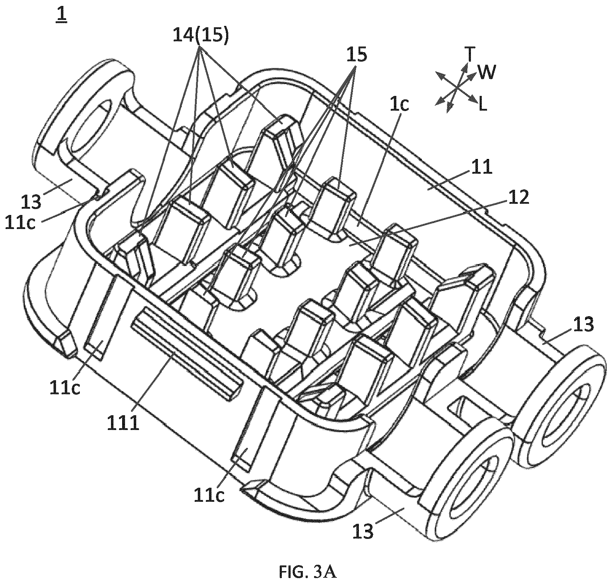

As shown in FIG. 3A to FIG. 3D, the first cover 1 may have, for example, a first sidewall 11, a first end wall 12 and a plurality of first arms 13 (such as three first arms 13) that are formed integrally. The first sidewall 11 is connected with the first end wall 12. At the entire outer periphery of the first end wall 12, the first sidewall 11 stands up from the first end wall 12. The first sidewall 11 includes four sidewall portions connected end to end. Among the four sidewall portions, two widthwise sidewall portions extending along the width direction W are included, and the two widthwise sidewall portions are opposed to each other in the length direction L; and two lengthwise sidewall portions extending along the length direction L are also included, the two lengthwise sidewall portions are opposed to each other in the width direction W. In this way, the first sidewall 11 and the first end wall 12 are formed into a central recessed structure. Further, the main portion of each of the first arms 13 may be formed in a semi-cylindrical shape. Two of the first arms 13 are provided on one widthwise sidewall portion, and protrude outward from the widthwise sidewall portion. One of the first arms 13 is provided on the other widthwise sidewall portion, and protrudes outward from the widthwise sidewall portion. The widthwise sidewall portion where the widthwise sidewall portion is connected to the first arm 13 may be configured to receive an end of a wire inserted into the housing, which may be a part of a port for insertion of a wire. A notch, for example, may be formed at each location of the widthwise sidewall portion where the widthwise sidewall portion is connected to the first arm 13.

In the configuration illustrated, first arms 13 are elongated in a direction extending away from the channel and partially surround a passage into which a wire may be inserted. In this example, each first arm 13 bounds a passage around approximately 50% of its perimeter. The passage may be aligned with the opening of the sidewall through which a wire end may be inserted into the housing. First arms 13 may include one or more wire guidance members. In this example, each of the first arms 13 includes an annular portion 18 at a distal end of the arm such that a wire inserted through an opening in the annular portion 18 will enter the passage.

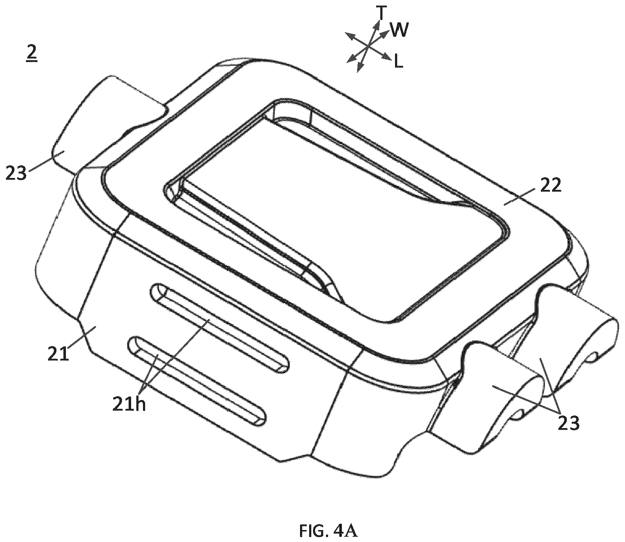

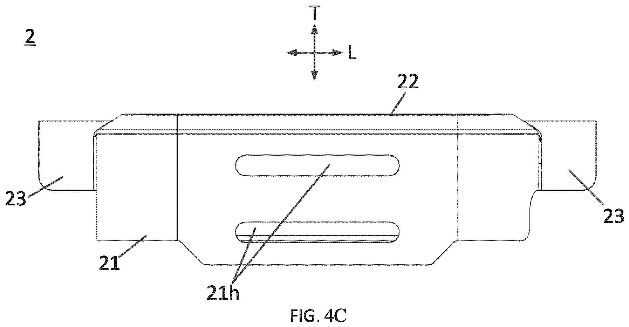

In this example, the second cover 2 can be used as a top cover of the housing, and the second cover 2 also exhibits electrically insulating property, for example, it can be made of insulating material and an inlay made of non-insulating material can be further provided in the insulating material. As shown in FIG. 4A to FIG. 4D, the second cover 2 may have, for example, a second sidewall 21, a second end wall 22 and a plurality of second arms 23 (such as three second arms 23) that are formed integrally. The second sidewall 21 is connected with the second end wall 22. At the entire outer periphery of the second end wall 22, the second sidewall 21 stands up from the second end wall 22. The second sidewall 21 includes four sidewall portions connected end to end. Among the four sidewall portions, two widthwise sidewall portions extending along the width direction W are included, and the two widthwise sidewall portions are opposed to each other in the length direction L; and two lengthwise sidewall portions extending along the length direction L are also included, the two lengthwise sidewall portions are opposed to each other in the width direction W. In this way, the second sidewall 21 and the second end wall 22 are formed into a central recessed structure. Further, the main portion of each of the second arms 23 may be formed in a semi-cylindrical shape. Two of the second arms 23 are provided on one widthwise sidewall portion, and protrude outward from the widthwise sidewall portion. One of the second arms 23 is provided on the other widthwise sidewall portion, and protrudes outward from the widthwise sidewall portion. A notch (the other part of a port for insertion of a wire) is formed at each location of the widthwise sidewall portion where the widthwise sidewall portion is connected to the second arm 23.

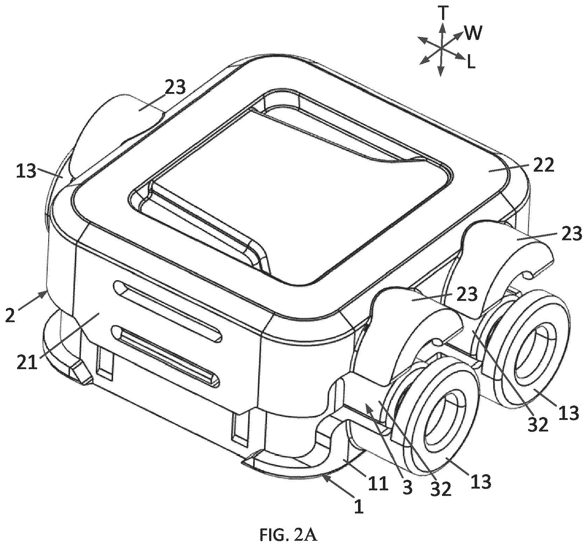

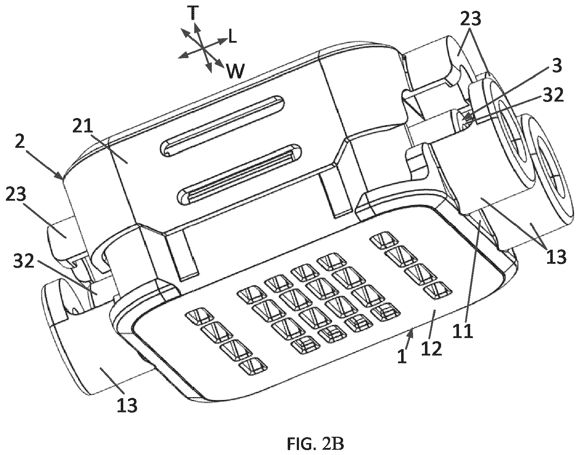

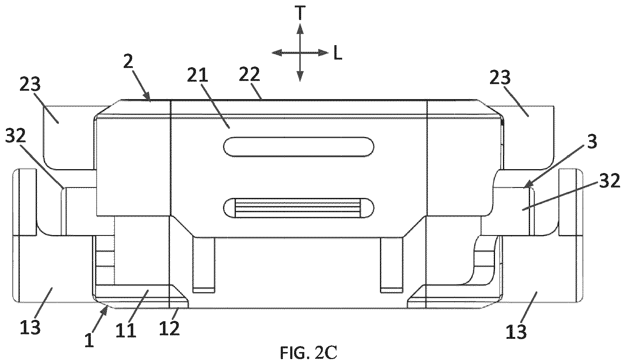

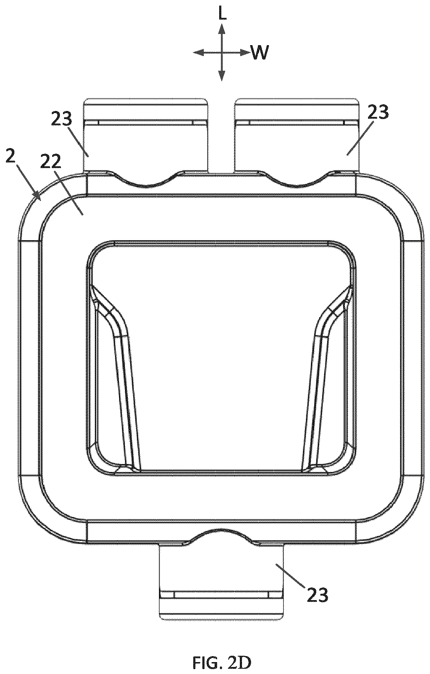

In the configuration illustrated, each of the second arms 23 is elongated in a direction extending away from the channel and parallel to a first arm 13. Each second arm 23 partially surrounds a passage into which a wire may be inserted. In this example, when a first arm 13 and a second arm 23 are pressed together, they cooperate to fully surround a passage. In this example, each second arm 23 bounds a passage around approximately 50% of its perimeter. The second arm 23 may be aligned with the opening of the sidewall through which a wire end inserted into the passage may enter the housing. In this way, as the first cover 1 is inserted into the second cover 2 along the thickness direction (assembly direction) T (referring to the pre-assembled state of FIG. 2A to FIG. 2D) and finally assembled (referring to the assembled state of FIG. 1A to FIG. 1D), a partial structure of the first sidewall 11 and a partial structure of the second sidewall 21 overlap each other in the thickness direction T after being shifted in the width direction W, and another partial structure of the first sidewall 11 and another partial structure of the second sidewall 21 are aligned in the thickness direction T and abut against each other. Therefore, in the assembled state, the first end wall 12 of the first cover 1 can be used as a bottom wall of the housing, the second end wall 22 of the second cover 2 can be used as a top wall of the housing, and the first sidewall 11 of the first cover 1 and the second sidewall 21 of the second cover 2 together constitute a sidewall of the housing. In this way, the first end wall 12 and the first sidewall 11 of the first cover 1 as well as the second end wall 22 and the second sidewall 21 of the second cover 2 surround an internal space of the housing. Further, the first arm 13 of the first cover 1 and the second arm 23 of the second cover 2 are in shape fit with each other, and in the assembled state, the first arm 13 and the second arm 23 in pair define a passage communicating with the internal space and the exterior of the housing, three passages all extend along the length direction L in parallel to each other. Both of the notch of the first sidewall 11 and the notch of the second sidewall 21 together constitute a port where the passage communicates with the internal space. Here, the expression of a plurality of passages extending in parallel to each other includes a case where the axes of two passages are coincident. For example, the number of the passages provided on one side of the housing may be equal to the number of the passages provided on one other side of the housing.

However, it is not a requirement that the housing have the same number of passages on each side of the housing. In the example, illustrated, the housing has two passages on one side and one passage on the other. Such a configuration, for example, allows three wire ends to be inserted into the housing to be connected together. The connector, for example, may be used to splice a second wire to a first wire that have been cut to expose two wire ends. Further, it should be appreciated that though three ports are illustrated for receiving wire ends, a housing may have 2, 4, 5, 6, or more ports. As will be described below, a connector as described herein may be manufactured with one or more seals that seal the ports of the connector until pierced for insertion of a wire end into that port. Accordingly, a connector may be manufactured with more ports than that to be used in practice.

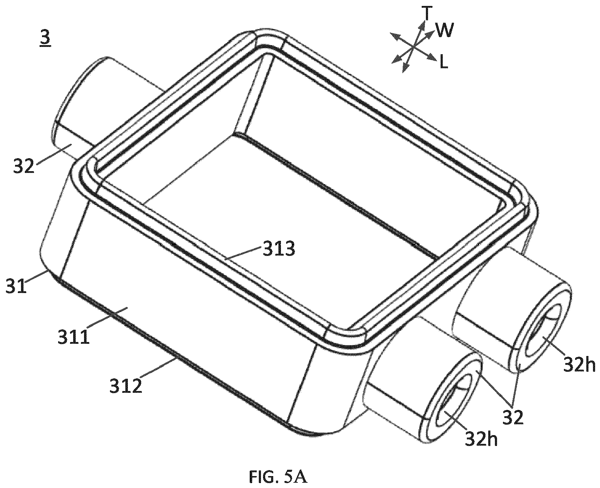

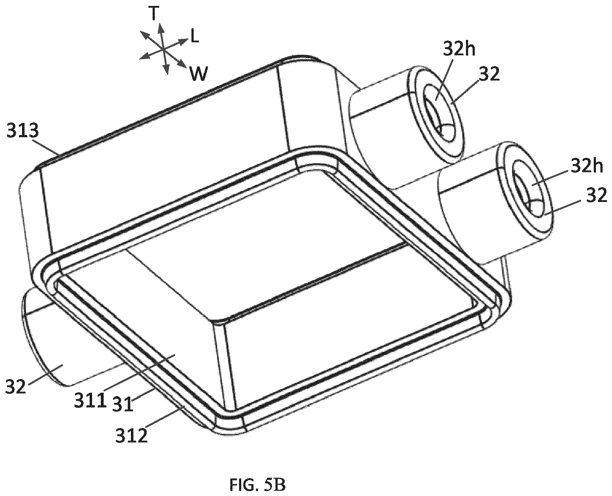

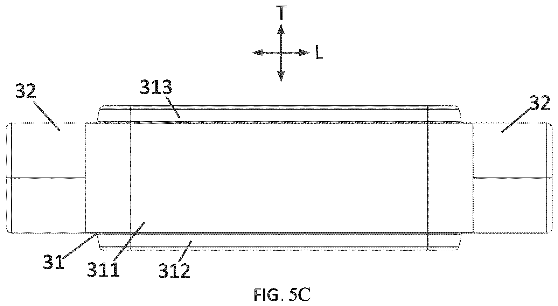

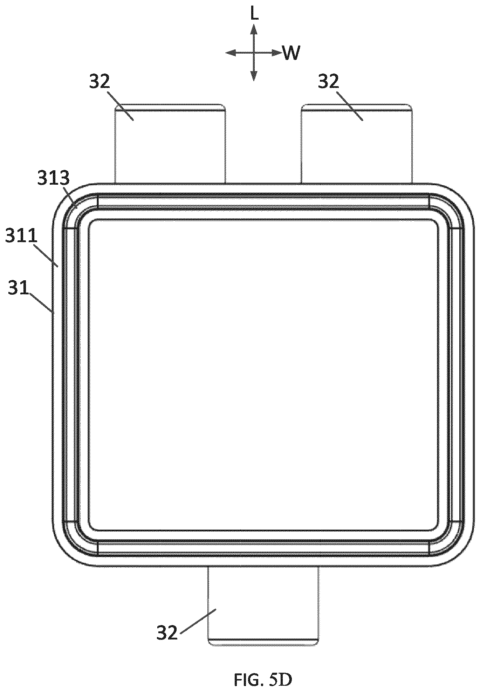

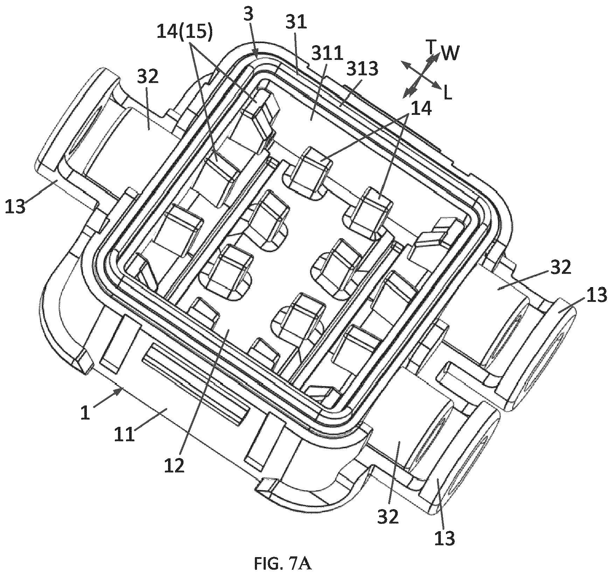

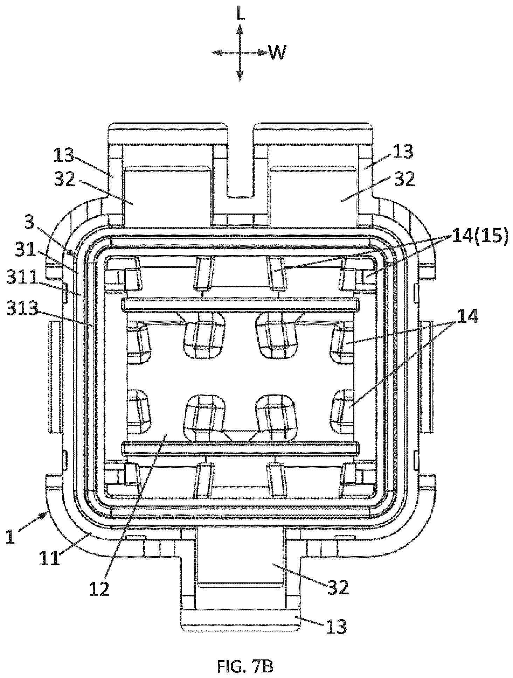

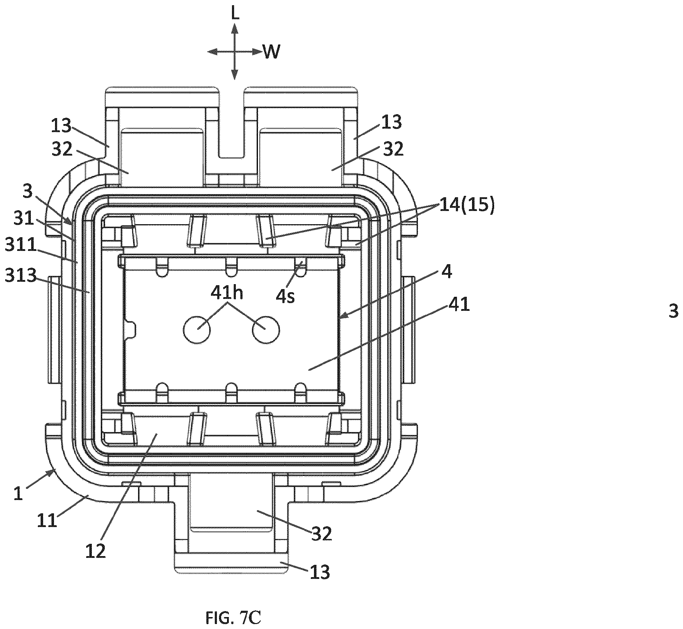

In this example, provided with the seal 3, the internal space of the housing can be isolated from the exterior regardless of the number of inserted wires. For this purpose, the seal 3 may be a preform made of an elastic material (which may contain rubber and/or silicone, or an example of which may be rubber or silicone). The seal 3 is accommodated within the internal space. In the assembled state, referring to FIG. 7A to FIG. 7E, the seal 3 is able to close the gap between the first cover 1 and the second cover 2, and the seal 3 can be used for sealing at the port regardless of whether there is a wire passing through the port or not, whereby the sealing of the seal 3 isolates the internal space from the exterior. Specifically, as shown in FIG. 5A to FIG. 5E, the seal 3 includes a sidewall sealing portion 31 and passage sealing portions 32 that are formed integrally.

As shown in FIG. 5A to FIG. 5E, the sidewall sealing portion 31 includes a main body 311, a first sealing lip 312 and a second sealing lip 313. The second sealing lip 313 may be formed on a top surface of the sidewall sealing portion and the second sealing lip 312 may be formed on a bottom surface of the sidewall sealing portion. In some examples, the sidewall sealing portion may include multiple sealing lips on the top surface of the sidewall sealing portion and multiple sealing lips on the bottom surface of the sidewall sealing portion. The main body 311 may be shaped to encircle an internal space within the connector housing. In this example, the main body 311 has a rectangular structure conforming to the rectangular shape of the internal space within the connector housing. Further, the main body 311 has a thickness in the thickness direction T that exceeds the height of the internal space in the thickness direction T when the first cover 1 and second cover 2 are pressed fully together. Accordingly, when in use, the seal may be slightly compressed to provide a seal around the internal space at the interfaces between the seal 3 and the first cover 1 and second cover 2. Accordingly, the outer peripheral surface of the main body 311 and the inner wall surface of the sidewall of the housing are in shape fit, and the main body 311 is able to be in sealing contact with almost the entire inner wall surface of the sidewall. It should be understood that in this example, the inner wall surface of the sidewall of the housing may be defined by the first sidewall 11 and the second sidewall 21, and includes the part of the surface of the first sidewall 11 and the second sidewall 21 exposed toward the internal space of the housing. The first sealing lip 312 is provided at the end of the main body 311 opposite to the first end wall 12, and extends continuously over the entire circumference along the circumferential direction of the main body 311. The first sealing lip 312 protrudes from the main body 311 toward the first end wall 12 and is in sealing contact with the first end wall 12. The second sealing lip 313 is provided at the end of the main body 311 opposite to the second end wall 22, and extends continuously over the entire circumference along the circumferential direction of the main body 311. The second sealing lip 313 protrudes from the main body 311 toward the second end wall 22 and is in sealing contact with the second end wall 22. Thus, an edge at first end of the sidewall sealing portion 31 is in sealing contact with the first end wall 12, and an edge at second end of the sidewall sealing portion 31 is in sealing contact with the second end wall 22. Further, the thickness of each part of the first sealing lip 312 is smaller than the thickness of the corresponding part of the main body 311, and the thickness of each part of the second sealing lip 313 is smaller than the thickness of the corresponding part of main body 311, which can improve the elastic deformation ability of the lips 312, 313 after contact with the end walls 12, 22, thus improve the sealing effect.

As shown in FIG. 5A to FIG. 5E, the passage sealing portions 32 protrude outward from the sidewall sealing portion 31, namely protrude away from the internal space from the outer peripheral surface of the sidewall sealing portion 31. The passage sealing portions 32 are in shape fit with the passages and protrude into the passages defined by the first arms 13 of the first cover 1 and the second arms 23 of the second cover 2, whereby a contact sealing or a small gap is obtained between the outer peripheral surface of each passage sealing portion 32 and the wall surface of the passage defined by the first arm 13 and the second arm 23. Optionally, each passage sealing portion 32 may be slightly larger than the passage formed by the cooperation of a first arm 13 and a second arm 23, such that the passage sealing portion 32 is compressed when the first arm 13 and the second arm 23 are pressed together.

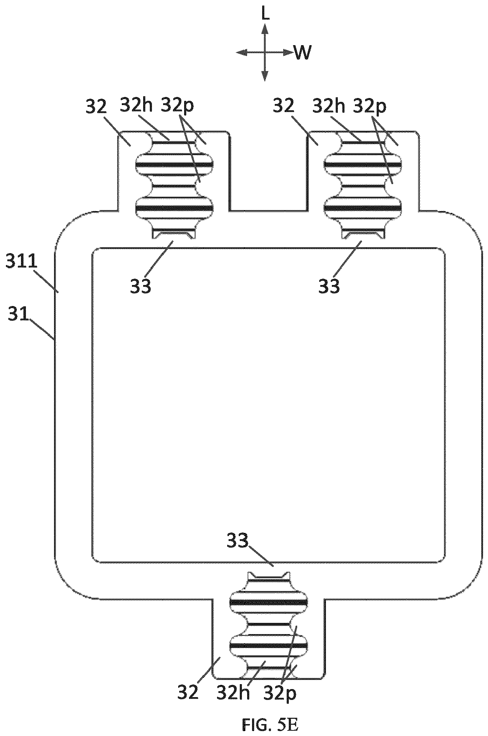

Further, an insertion hole 32h is formed in the center of each passage sealing portion 32, and a wire can be inserted into the internal space of the housing through the insertion hole 32h. In order to close the insertion hole 32h before the wire is inserted, as shown in FIG. 5E, the seal 3 further includes a membrane or other thin portion 33 located in the insertion hole 32h for closing the inserted hole 32h in a state where no wire is inserted. Compared with the main body 311, the thickness of the thin portion 33 is small, and an annular groove is formed at the portion where the thin portion 33 and the main body 311 are connected, namely the thickness of the connecting part where the thin portion 33 is connected to other parts is smaller, which is beneficial to reduce the insertion force of the wire pushing away or piercing the thin portion 33 into the internal space of the housing. Further, as shown in FIG. 5E, on the inner peripheral surface of the passage sealing portion 32 bounding the insertion hole 32h, the passage sealing portion 32 has a plurality of annular protrusions 32p for contact sealing with the wire inserted into the insertion hole 32h. Here, the diameter of the inner circle defined by the annular protrusion 32p may be slightly smaller than the diameter of the wire intended to be used. In this way, even after the wire enters the internal space of the housing through the insertion hole 32h by pushing away or piercing the thin portion 33, the port of the housing can be sealed due to the contact sealing between the annular protrusion 32p and the wire, whereby an isolation of the internal space of the housing from the exterior is still achieved. Here, the diameter of the groove may be equal to the diameter of the inner circle defined by the annular protrusion 32p, or slightly smaller than the diameter of the annular protrusion 32p, after the thin portion 33 is pushed away or pierced by the wire through the insertion hole 32h, the sealing can still be kept at the original location of the thin portion 33.

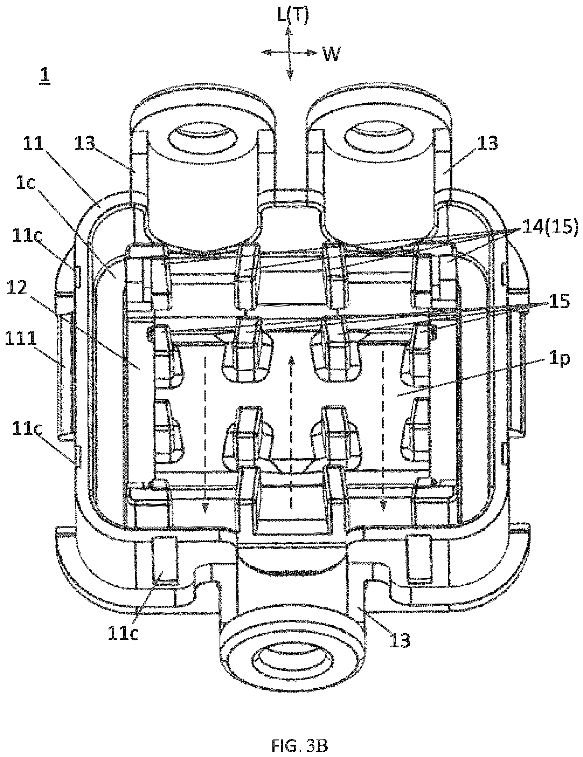

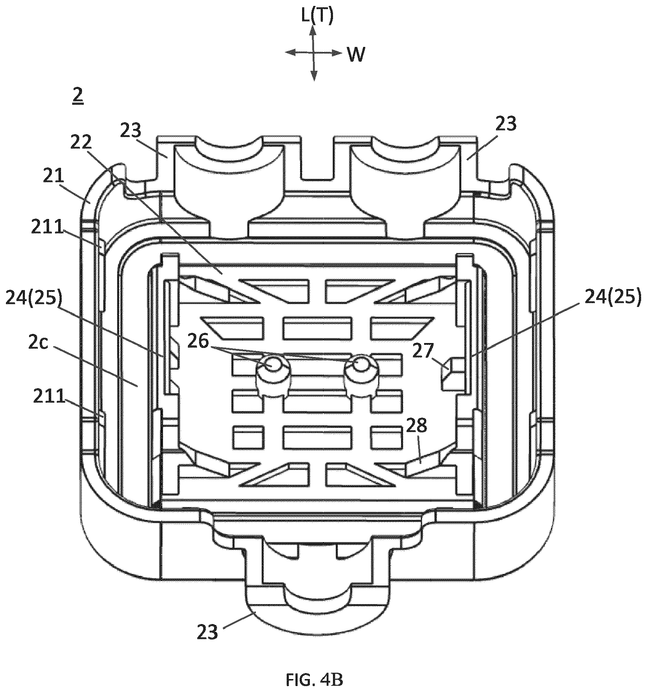

In this example, the wire connector includes a first limiting mechanism provided on both of the first cover 1 and the second cover 2, so that the seal 3 can be positionally limited, and the above-mentioned sealing effect in the assembled state can be improved. Specifically, as shown in FIG. 3A, FIG. 3B, FIG. 4A and FIG. 4B, the first limiting mechanism includes a plurality of first limiting protrusions 14 provided on the first end wall 12 of the first cover 1 and a plurality of second limiting protrusions 24 provided on the second end wall 22 of the second cover 2. As shown in FIG. 3A and FIG. 3B, the first limiting protrusions 14 stand up from the first end wall 12 and protrude toward the second end wall 22, and the first limiting protrusions 14 and the first sidewall 11 define a first mounting location 1c which is in shape fit with the main body 311 of the seal 3. As shown in FIG. 4A and FIG. 4B, the second limiting protrusions 24 stand up from the second end wall 22 and protrude toward the first end wall 12, and the second limiting protrusions 24 and the second sidewall 21 define a second mounting location 2c which is in shape fit with the main body 311 of the seal 3. It should be understood that in the assembled state, the first mounting location 1c and the second mounting location 2c overlap or are opposite to each other, so as to jointly define the mounting location of the seal 3.

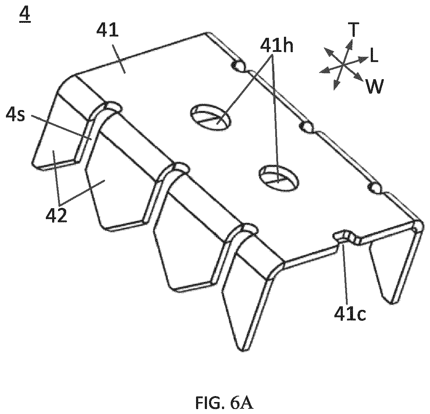

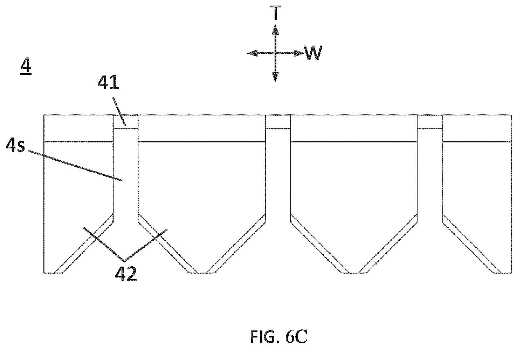

In this example, the cutting contact 4 is used to cut the insulating layer of the part of the wires extending into the internal space, so that the cutting contact 4 is in electrical connection with the conductive cores of the wires. Thus, the cutting contact 4 can be made of an electrically conductive material such as metal. As shown in FIG. 6A to FIG. 6D, the cutting contact 4 includes a plate body 41 and a plurality of cutting blades 42. The plurality of cutting blades 42 stand up from both edges at the ends in its width direction. The two adjacent cutting blades 42 define a cutting groove 4s, and the cutting groove 4s includes a tapered portion and a constant portion in communication with each other. The tapered portion extends from the opening of the cutting groove 4s to the constant portion with a width gradually decreasing, and the width of the constant portion is equal to the minimum width of the tapered portion and extends linearly to the location where the cutting blades 42 are connected to the plate body 41. In this way, the tapered portion can guide the wire into the corresponding constant portion smoothly, and at the constant portion, the insulating layer of the wire is cut by the cutting blades 42 on both sides of the cutting groove 4s. It should be understood that the edge portion of the cutting blade 42 adjacent to the cutting groove 4s may be formed with a sharp blade, so that the cutting blades 42 can smoothly cut open the insulating layer.

It should be understood that the method of cutting, piercing or removing the insulating layer of the wire and the electrical connection method of the wire and the cutting blades 42 in the present disclosure are not limited to those. Various existing ways or means may be applied in the present disclosure. For example, a connector is illustrated with a single blade that connects all of the wires inserted into the housing as a single circuit. In other examples, a connector may include two or more such blades, enabling wires inserted into the housing to be connected into two or more electrically isolated circuits. Conversely, connection between wires inserted into the housing and conductive members within the housing may be made by cooperation of two or more conductive members, such as one conductive member attached to first cover 1 and another conductive member attached to second cover 2. In some optional solutions, connections between wires inside the housing do not require that blade 42 necessarily have the function of cutting the insulating layer of the wire.

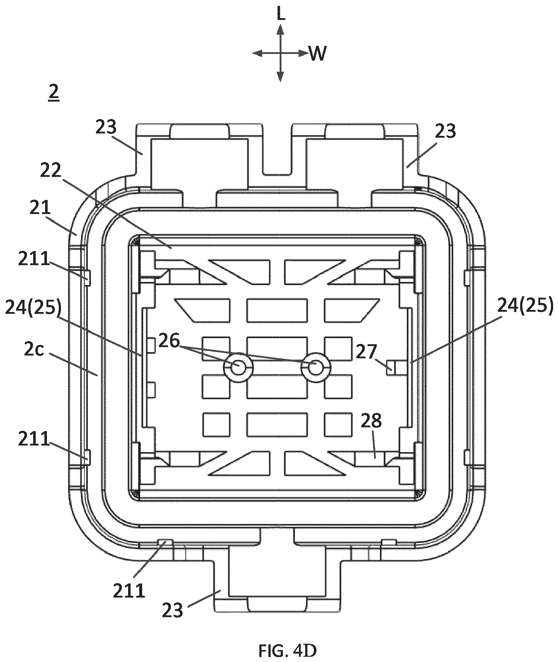

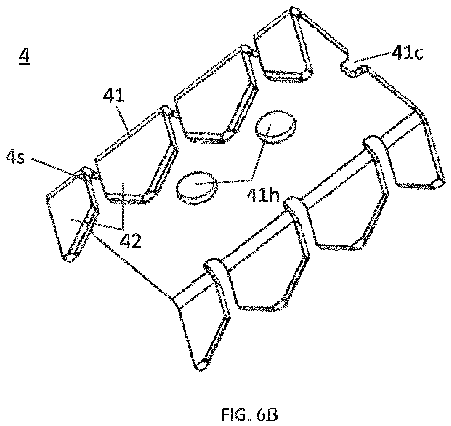

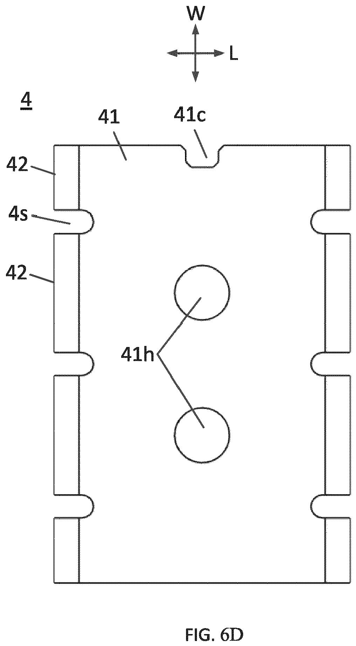

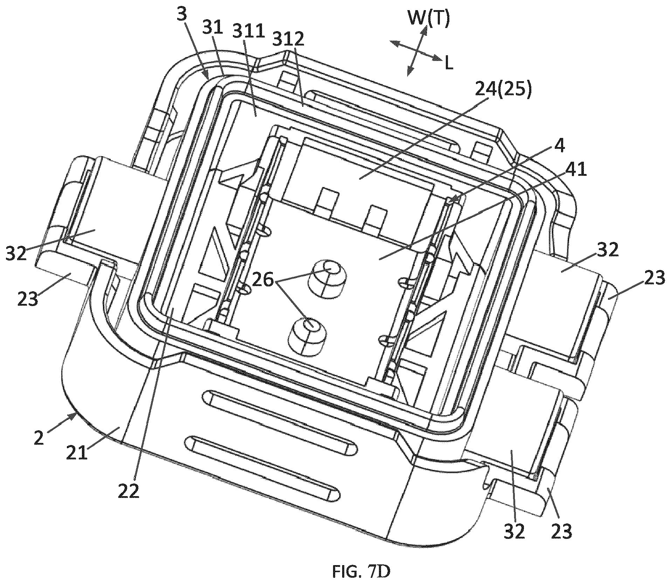

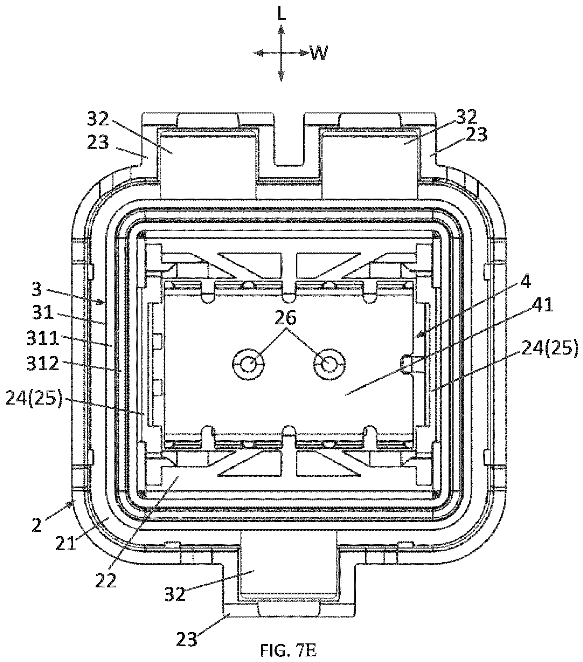

Further, as shown in FIG. 6A, FIG. 6B and FIG. 6D, the plate body 41 is provided with two mounting holes (e.g. circular holes) 41h spaced apart from each other. In some examples, any suitable number of mounting holes 41h may be used, for example one mounting hole 41h may be used, two mounting holes 41h may be used or more than two mounting holes 41h may be used. As shown in FIG. 4B and FIG. 4D, the second end wall 22 of the second cover 2 is correspondingly provided with two mounting portions (e.g. cylindrical protrusions) 26. In some examples, any suitable number of mounting portions 26 may be used, for example one mounting portion 26 may be used, two mounting portions 26 may be user or greater than two mounting portions 26 may be used. As shown in FIG. 7D and FIG. 7E, the cutting contact 4 is fixedly mounted on the second end wall 22 of the second cover 2 through the fitting (e.g. interference fit) between the mounting portions 26 and the mounting holes 41h. In addition, as shown in FIG. 6A, FIG. 6B and FIG. 6D, one end edge in the width direction W of the plate body 41 is provided with a guiding groove 41c. In some examples, more than one guiding groove 41c may be provided. As shown in FIG. 4B and FIG. 4D, the second end wall 22 of the second cover 2 is correspondingly provided with a guiding portion 27. In some examples, more than one guiding portion 27 may be provided. As shown in FIG. 7D and FIG. 7E, the guiding portion 27 and the guiding groove 41c are fit to guide the cutting contact 4 to be smoothly mounted on the second end wall 22 of the second cover 2.

In the illustrated example, the dimension of the cutting contact 4 in the length direction L is smaller than the dimension of the cutting contact 4 in the width direction W, however, this is only an example, and the present disclosure is not limited thereto.

In addition, although expressions such as the length direction L and the width direction W of the housing of the wire connector are used in this application, the use of this expression is only for the purpose of facilitating understanding and description, and is not intended to limit the present disclosure. For example, the housing may be substantial cubic in shape, but it is not essential. The housing may also have other shapes. For example, the dimension of the housing in the length direction L does not have to be larger than the dimension of the housing in the width direction W, especially in the case that the first arm 13 and the second arm 23 are not counted in the above-mentioned dimensions.

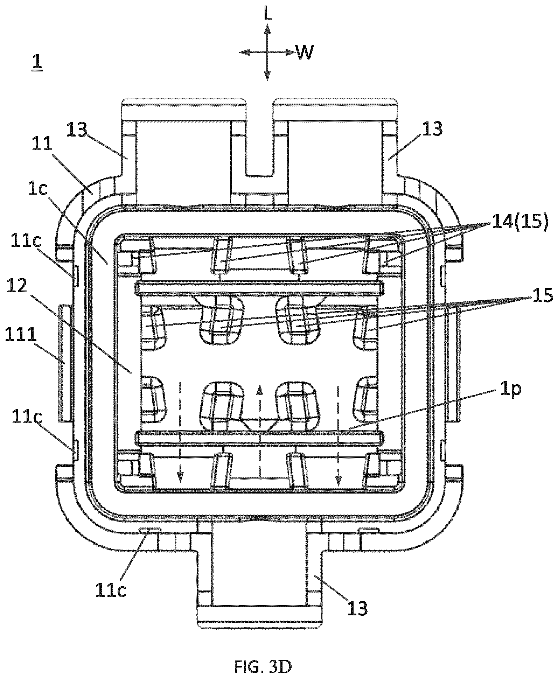

In order to enable the cutting contact 4 to smoothly cut the part of the wire extending into the internal space of the housing, the wire connector further includes a second limiting mechanism provided on the first cover 1. As shown in FIG. 3A, FIG. 3B and FIG. 3D, the second limiting mechanism defines a plurality of channels 1p (e.g. three channels 1p) along which the part of the wire inserted into the internal space travels (dotted lines with arrows indicate the extension paths of the different channels 1p and different directions in which the wires are inserted in the internal space), each channel 1p is aligned with the corresponding port, namely each channel 1p is aligned with the corresponding passage defined by the first arm 13 and the second arm 23. The second limiting mechanism includes a plurality of third limiting protrusions 15 provided on the first end wall 12 of the first cover 1, and the plurality of third limiting protrusions 15 are arranged in pairs. Channels 1p are defined between the third limiting protrusions 15 in pairs, and each channel 1p is defined by, for example, four pairs of third limiting protrusions 15. Further, for each pair of third limiting protrusions 15, from the side close to the corresponding port to the side away from the port, the distance between the inner side surfaces of the two third limiting protrusions 15 opposite to each other gradually decreases, which facilitates that the inserted wire is guided along the corresponding channel 1p. In addition, among the plurality of third limiting protrusions 15, there are common third limiting protrusions 15, and the opposite side surfaces of each common third limiting protrusion 15 define two adjacent channels 1p. As shown in FIG. 3B and FIG. 3D, in this example, the third limiting protrusions 15 for defining the three channels 1p are arranged in a matrix array, and the matrix array includes four Rows arranged in the length direction L and four columns arranged in the width direction W. Additionally, the two rows of third limiting protrusions 15 near the sidewall portions provided with the first arms 13 are also used as the first limiting protrusions 14 of the first limiting mechanism, whereas other three limiting protrusions 15 only serve to define the above-mentioned channels 1p. As shown in FIGs. 3A, 3B and 3D the middle two rows of third limiting protrusions 15 may have a chamfer 16 along the boundary between the limiting protrusions 15 and the first end wall 12 of the first cover 1. This chamfer 16 may be provided on any of the first limiting protrusions 14, third limiting protrusions 15 or any combination of limiting protrusions. The chamfer 16 along the boundary between the limiting protrusion and the first end wall of the first cover may function to align misdirected wires within the connector during insertion and/or to strengthen the pillar. The wire connector may also include one or more entry chamfers 17 on the first end wall 12 of the first cover 1, in between pairs of adjacent limiting protrusions of the first limiting protrusions 14 and/or between pairs of adjacent protrusions of the third limiting protrusions 15. The entry chamfers may be formed within channels 1p, and may function to align misdirected wires within the connector during insertion.

In addition, the wire connector may further include a third limiting mechanism provided on the second end wall 22 of the second cover 2 for limiting the mounting location of the cutting contact 4. As shown in FIG. 4B and FIG. 4D, the third limiting mechanism includes two fourth limiting protrusions 25 provided on the second end wall 22 of the second cover 2. The two fourth limiting protrusions 25 extend from the second end wall 22 and protrude toward the first end wall 12 of the first cover 1. The two fourth limiting protrusions 25 are formed in a plate shape extending along the length direction L and the thickness direction T, and a mounting location of the cutting contact 4 is defined between the two fourth limiting protrusions 25. Additionally, the two fourth limiting protrusions 25 are also used as the second limiting protrusions 24 of the first limiting mechanism of the wire connector. In addition, as shown in FIG. 4B and FIG. 4D, the end edges on both sides of the fourth limiting protrusion 25 in the length direction L are provided with supporting portions 28. The supporting portions 28 are in parallel to the cutting blades 42 of the cutting contact 4, so that the supporting portions 28 can limit the cutting blades 42 when the cutting contact 4 is mounted on the second cover 2. In this way, on the one hand, it can prevent the cutting blades 42 from being accidentally bent during the process of cutting the insulating layer of the wire by the supporting portions 28; on the other hand, connection strength between the fourth limiting protrusions 25 and the second end wall 22 can be improved by the supporting portions 28.

Further, in order to facilitate the insertion of the wire through the port of the housing into the internal space of the housing and the subsequent cutting of the insulating layer with the cutting contact 4, the wire connector has a pre-assembled state and an assembled state. As shown in FIG. 2A to FIG. 2D, the wire connector is in the pre-assembled state. As shown in FIG. 1A to FIG. 1D, the wire connector is in the assembled state (i.e., a final locked state). There is a distance in the thickness direction (assembly direction) T between the first end wall 12 of the first cover 1 and the second end wall 22 of the second cover 2, which is larger in the pre-assembled state than in the assembled state. In this way, in the pre-assembled state, there is a large space between the first cover 1 and the second cover 2, and the seal 3 can only be mounted in the first cover 1 but not in sealing contact with the second cover 2. Moreover, the first arms 13 of the first cover 1 and the second arms 23 of the second cover 2 are not in contact, and the cutting contact 4 is separated from the corresponding channels 1p, so it will not affect the wire insertion along the channels 1p. In the assembled state, the first cover 1 and the second cover 2 surround an internal space, the seal 3 realizes the isolation of the internal space from the exterior, and the seal 3 is in sealing contact with the first cover 1 and the second cover 2. Moreover, the first arm 13 of the first cover 1 and the second arm 23 of the second cover 2 surround a passage, and the cutting contact 4 is inserted into the corresponding channels 1p, thereby cutting open the insulating layers of the wires in the channels 1p.

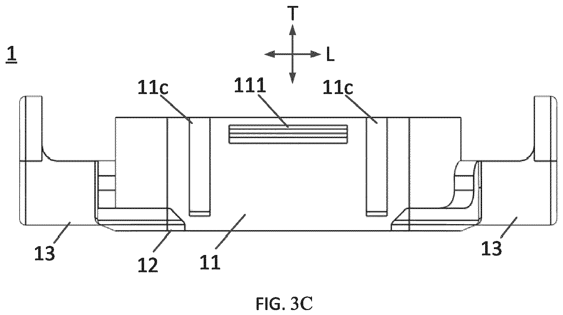

Further, in order to keep the first cover 1 and the second cover 2 in the pre-assembled state and the assembled state, the first cover 1 and the second cover 2 are formed with a snap-fit structure. As shown in FIG. 3A and FIG. 3C, snap-fit protrusions 111 protruding toward the exterior are provided on the outer surface of the first sidewall 11 of the first cover 1, and the snap-fit protrusions 111 extend linearly along the length direction L. As shown in FIG. 4A to FIG. 4C, the second sidewall 21 of the second cover 2 is formed with snap-fit holes 21h, and the snap-fit holes 21h penetrate through the second sidewall 21 along the width direction W. The two snap-fit holes 21h in one sidewall portion of the second sidewall 21 correspond to one snap-fit protrusion 111, and the two snap-fit holes 21h corresponding to the one snap-fit protrusion 111 are spaced apart in the thickness direction T. In the pre-assembled state, the snap-fit protrusion 111 is fitted with one snap-fit hole 21h to maintain the pre-assembled state; in the assembled state, the snap-fit protrusion 111 is fitted with the other snap-fit hole 21h to maintain the assembled state.

Here, the number and arrangement of the snap holes 21h and the snap-fit protrusions 111 are not limited to the above description and the drawings. For example, two snap-fit protrusions corresponding to two snap-fit holes may be provided on one side surface of the housing. In this way, in the pre-assembled state, one snap-fit protrusion is fitted with one snap-fit hole, and in the assembled state, the two snap-fit protrusions and the two snap-fit holes are respectively fitted. It should be understood that such a snap-fit structure can be provided on two or more sides of the housing.

Further, in order to guide the assembly of the first cover 1 and the second cover 2, the first cover 1 and the second cover 2 may be formed with guide structure. As shown in FIG. 3A and FIG. 3C, orientation grooves 11c are formed on the outer wall surface of the first sidewall 11 of the first cover 1, and the orientation grooves 11c are grooves extending linearly along the thickness direction T formed on the outer wall surface of the first sidewall 11, and the grooves also have openings that are open toward the second sidewall 21. As shown in FIG. 4B and FIG. 4D, the second sidewall 21 of the second cover 2 is provided with orientation protrusions 211, which are formed on the inner wall surface of the second sidewall 21 and extend linearly along the thickness direction T. The orientation protrusions 211 are in shape and position fit with the orientation grooves 11c, and the orientation grooves 11c are fitted with the orientation protrusions 211 so that the first cover 1 and the second cover 2 are assembled together.

By applying the above technical solution(s), the present disclosure provides a wire connector, which includes a first cover and a second cover that exhibit electrically insulating property and can be assembled together. In the assembled state in which the first cover and the second cover are assembled together, the first cover and the second cover surround an internal space and define a plurality of ports for insertion of wires. Further, the wire connector further includes a seal accommodated in the internal space. In the assembled state, the gap between the first cover and the second cover is closed by the seal, and all the ports are closed by the seal regardless of whether any wire pass through the ports, so that the internal space and the exterior are isolated by sealing of the seal. In this way, in an assembled state of the first cover and the second cover, the gap between the first cover and the second cover and the ports on the housing are always closed by the seal, so that the wire connector has a good sealing effect.

The examples of the present disclosure are described in detail in the above specific examples, and supplementary descriptions are provided below.

i. In the above example, it is explained that the housing is composed of the first cover 1 and the second cover 2 assembled together and fixed to each other by snap-fit, so if the internal space of the housing is isolated from the exterior by the seal 3, the gap between the first cover 1 and the second cover 2 and the ports defined by the first cover 1 and the second cover 2 need to be closed by the seal 3, but the present disclosure is not limited thereto. In an optional solution, the gap between the first cover 1 and the second cover 2 can be closed by welding or other means, so it is only necessary to make sure the ports closed by seal 3 regardless of whether there is any inserted wire or not, thus isolate the internal space from the exterior.

ii. In an optional solution of the present disclosure, the wire connector may include a first limiting mechanism provided to at least one of the first cover 1 or the second cover 2, and in the assembled state, the first limiting mechanism together with the first sidewall 11 and the second sidewall 21 define the mounting location of the sidewall sealing portion 31 of the seal 3.

In an optional solution of the present disclosure, one of the plate body 41 of the cutting contact 4 or the second end wall 22 of the second cover 2 is provided with a mounting portion, and the other one of the plate body 41 of the cutting contact 4 or the second end wall 22 of the second cover 2 is provided with a mounting hole, and the cutting contact 4 is fixedly mounted on the second cover 2 via the fitting of the mounting portion and the mounting hole.

In an optional solution of the present disclosure, one of the plate body 41 of the cutting contact 4 or the second end wall 22 of the second cover 2 is provided with a guiding portion, the other one of the plate body 41 of the cutting contact 4 or the second end wall 22 of the second cover 2 is provided with a guiding groove, the cutting contact 4 is guided to be mounted on the second cover 2 via the fitting of the guiding portion and the guiding groove.

iii. In the example of the present disclosure, as shown in FIGs. 3A, 3B and 3D, each of the root portions of the third limiting protrusions 15 connected to the first end wall 12 of the first cover 1 is formed with a reinforcing portion, and the reinforcing portion may be a protruding portion extending around the entire circumference of the root portion of the third limiting protrusion 15. On the one hand, the reinforcing portion is used to improve the connection strength of the connecting part between the third limiting protrusion 15 and the first end wall 12; on the other hand, the surface of the reinforcing portion is inclined, for auxiliary assistance to guide the wire extending along the corresponding channel 1p defined by the third limiting protrusions 15, which can avoid misleading of the wire during the insertion process.

In addition, in the example of the present disclosure, between two adjacent rows of the third limiting protrusions 15, the surface of the first end wall 12 may be formed with inclined surfaces for auxiliary assistance of the insertion of the wire. The inclined surfaces also prevent misguiding of the wire during insertion.

In addition, the channel 1p is not limited to be defined by the spaced third limiting protrusions 15, but may also be defined by a continuous wall portion.

iv. It should be understood that the parts of the first end wall 12 and the second end wall 22 where they are in sealing contact with the sealing lips 312, 313 of the seal 3 can be formed as flat surfaces, which may be beneficial to the two end walls 12, 22 are in good contact sealing with seal 3.

v. It should be understood that, in the above example, the widths of the constant portions of different cutting grooves 4s formed by the cutting contact 4 are equal, but the present disclosure is not limited thereto, the widths of the constant portions of different cutting grooves 4s may be unequal.

vi. It should be understood that the seal 3 of the present disclosure may be a preform made of elastic material, which is assembled between the first cover 1 and the second cover 2 through a subsequent assembly process. Optionally, the seal 3 may also be integrally formed with the first cover 1 by means of vulcanization, bonding or the like.

vii. In the present disclosure it should be understood that when the wire connector is in an assembled state rather than a pre-assembled state, regardless of the number of the inserted wires or even if no wire is inserted, the internal space of the housing and the exterior may be isolated by the seal 3.

viii. The wire connectors of the present disclosure may be insulation displacement connectors or other types of wire connectors.

ix. The present disclosure further provides an operation method of wire connector. The operation method may comprise the following steps.

Provide the wire connector in a pre-assembly state in which a distance between the first end wall 12 of the first cover 1 and the second end wall 22 of the second cover 2 in the assembly direction of the first cover 1 and the second cover 2, that is, the thickness direction T is larger in the pre-assembled state than in the assembled state. The snap-fit protrusion 111 of the first cover 1 and one snap-fit hole 21h of the second cover 2 fit with each other to keep the pre-assembled state.

Insert a plurality of wires into the wire connector via a plurality of ports of the wire connector. Each wire pushes away or pierces the pierceable membrane or thin portion 33 of the seal 3, whereby an end of each wire enters the internal space of the housing.

Assemble the first cover 1 and the second cover 2 so that the wire connector is in assembled state. In the assembled state, the insulating layer of each wire is cut open by the cutting contact 4 to electrically connect the plurality of wires, and the seal 3 of the wire connector is held by the first cover 1 and the second cover 2, so that the seal 3 closes a gap between the first cover 1 and the second cover 2 and closes the plurality of ports. Furthermore, the snap-fit protrusion 111 of the first cover 1 and the other one snap-fit hole 21h of the second cover 2 fit with each other to maintain the assembled state.

## Claims

1. A wire connector, comprising:
a first insulating cover (1) comprising a first sidewall (11);
a second insulating cover (2) comprising a second sidewall (21), and configured to assemble with the first insulating cover such that when in an assembled state, the second insulating cover (2) and the first insulating cover (1) surround an internal space, and the second sidewall (21) and the first sidewall (11) comprise a plurality of ports, the ports configured to allow wires to pass into the internal space of the connector; and
an elastic seal (3) configured to be accommodated in the internal space, wherein in the assembled state, the seal (3) closes a gap between the first insulating cover (1) and the second insulating cover (2) and the seal (3) comprises thin portions (33) which close respective ports of the plurality of ports in the assembled state.

2. The wire connector of claim 1, wherein:
the thin portions (33) comprise pierceable membranes, and are configured to be pierced by wires inserted into the internal space of the connector; and
the thin portions are configured to close the ports when pierced by a wire, so that the internal space is isolated from an exterior by sealing of the seal (3).

3. The wire connector of claim 2, wherein the seal (3) further comprises a sidewall sealing portion (31), wherein the first sidewall (11) and the second sidewall (21) define an inner sidewall surface, and the sidewall sealing portion (31) is in sealing contact with at least a part of the inner sidewall surface.

4. The wire connector of claim 3, wherein
the first insulating cover (1) further comprises a first end wall (12), an outer periphery of the first end wall (12) being connected to the first sidewall (11),
the second insulating cover (2) further comprises a second end wall (22), an outer periphery of the second end wall (22) being connected to the second sidewall (21), and
a first edge at a first end of the sidewall sealing portion (31) is in sealing contact with the first end wall (12), and a second edge at a second end of the sidewall sealing portion (31) is in sealing contact with the second end wall (22).

5. The wire connector of claim 4, wherein the sidewall sealing portion (31) comprises a main body (311), a first sealing lip (312) and a second sealing lip (313),
wherein the first sealing lip (312) extends from the main body (311) towards the first end wall (12) and is in sealing contact with the first end wall (12), and the second sealing lip (313) extends from the main body (311) towards the second end wall (22) and is in sealing contact with the second end wall (22).

6. The wire connector of claim 5, wherein the first cover (1) further comprises a plurality of first arms (13) protruding away from the internal space from the first sidewall (11), and the second cover (2) further comprises a plurality of second arms (23) protruding away from the internal space from the second sidewall (21), wherein the first arms (13) and the second arms (23) are arranged in pairs, and in the assembled state, each pair of the pairs of first arms and second arms defines a passage of a plurality of passages, wherein each passage of the plurality of passages comprises a respective port of the plurality of ports.

7. The wire connector of claim 6 wherein the seal (3) further comprises passage sealing portions (32), configured to seal the plurality of passages defined between first arms and second arms in the assembled state and further configured to seal a passage of the plurality of passages when a wire is inserted into the corresponding port of the passage to the internal space of the connector.

8. The wire connector of claim 6 wherein
each of the passage sealing portions (32) extends into a corresponding passage of the plurality of passages, each of the passage sealing portions (32) is shape fit with the corresponding passage, and an insertion hole (32h) is formed in center of each of the passage sealing portions (32), and
for each passage sealing portion, the thin portion (33) is located in the insertion hole (32h) and closes the insertion hole in a state when a wire is not inserted into the connector, and the passage sealing portions are configured to receive wires inserted into the respective passages to the internal space.

9. The wire connector of claim 8, wherein on an inner peripheral surface of the insertion hole (32h), the passage sealing portion (32) is formed with one or more annular protrusion(s) (32p) which, when a wire is inserted into the connector, is configured to contact the wire, such that the passage is sealed.

10. The wire connector of claim 5, further comprising a first limiting mechanism provided on at least one of the first cover (1) and the second cover (2), comprising a plurality of first limiting protrusions (14) provided on the first cover (1) and a plurality of second limiting protrusions (24) provided on the second cover (2), wherein the first limiting protrusions (14) protrude toward the second cover (2), and the second limiting protrusions (24) protrude toward the first cover (1), the first limiting mechanism, the first sidewall (11) and the second sidewall (21) define a mounting location of the sidewall sealing portion (31) of the seal (3) in the assembled state.

11. The wire connector of claim 10 further comprising a second limiting mechanism provided on the first cover (1) comprising a plurality of third limiting protrusions (15) provided on the first cover (1), wherein the third limiting protrusions (15) are arranged in pairs, and the channels (1p) are defined between one or more pairs of the third limiting protrusions (15), the second limiting mechanism defines channels (1p) aligned with corresponding ports, and wherein, when wires are inserted into the internal space of the connector, the wires pass through ports into the internal space along corresponding channels.

12. The wire connector of claim 11 wherein at least a part of the third limiting protrusions (15) is used to define a mounting location of the seal (3).

13. The wire connector of claim 1, further comprising a cutting contact (4) made of a conductive material, wherein the cutting contact (4) comprises a plate body (41) and a plurality of cutting blades (42), the plurality of cutting blades (42) standing up from the plate body (41) toward a plurality of channels (1p) parallel to the ports or protruding into the channels (1p), and configured to cut an insulating layer of a part of wires inserted into the internal space, so that the cutting contact (4) is in electrical connection with conductive cores of the wires, cutting grooves (4s) are defined between every two adjacent cutting blades of the plurality of cutting blades (42), and the cutting grooves (4s) are aligned with corresponding channels (1p), whereby, when one or more wires are inserted into the internal space, the insulating layer of the one or more wires is positioned in the cutting grooves (4s), to be cut open by the cutting blades (42) on both sides of the cutting grooves (4s).

14. A method of assembling a wire connector, the method comprising:
inserting one or more wires into one or more respective ports defined between a first cover and a second cover of the wire connector of the wire connector through one or more portions of a seal (3) of the wire connector closing the one or more respective ports; and
pressing the first cover (1) and the second cover (2) together such that:
a cutting contact (4) of the wire connector cuts insulating layers of the plurality of wires, and
the seal (3) of the wire connector is held by the first cover (1) and the second cover (2), and
the seal (3) closes a gap between the first cover (1) and the second cover (2).

15. The method of claim 14, wherein inserting one or more wires through one or more portions of the seal (3) comprises piercing with the one or more wires respective pierceable membranes of the seal contained within the respective port.
